# EUROPEAN PATENT APPLICATION

(11) **EP 4 586 053 A1**
(43) Date of publication of application: **16.07.2025**
(21) Application number: 24151297.9
(22) Date of filing: 11.01.2024
(51) Int. Cl.: G06F 3/01, G02B 21/24

(54) **APPARATUS FOR AN OPTICAL IMAGING SYSTEM, OPTICAL IMAGING SYSTEM, METHOD AND COMPUTER PROGRAM**

(71) Applicant: Leica Instruments (Singapore) Pte. Ltd., Singapore 608924 (SG)
(72) Inventor: THEMELIS, George, 608924 Singapore (SG); GILLIOZ, Frédéric, 608924 Singapore (SG); PAULUS, Robert, 608924 Singapore (SG)
(74) Representative: 2SPL Patentanwälte PartG mbB

(57) **Abstract**

Examples relate to an apparatus for an optical imaging system comprising one or more processors and one or more storage devices. The apparatus is configured to obtain sensor data of an optical imaging sensor of the optical imaging system. The sensor data is indicative of an image of a sample. Further, the apparatus is configured to obtain gaze direction data of a sensor. The gaze direction data is indicative of a gaze direction of a user of the optical imaging system. The apparatus is further configured to generate region data indicative of a region of interest that the user gazes at on the image of the sample. The region data is generated based on the gaze direction data. Further, the apparatus is configured to generate output data indicative of an adjusted image of the sample to be displayed on a display device. The output data is generated based on the sensor data and the region data. The adjusted image of the sample comprises an emphasized area indicative of the region of interest, such that the emphasized area is emphasized relative to the region of interest in the image of the sample. The apparatus is further configured to transmit the output data for displaying on the display device.

## Description

### Technical field

Examples relate to an apparatus for an optical imaging system, such as surgical optical imaging system, an optical imaging system, a method and a computer program.

### Background

Communication between users of an optical imaging system, e.g., surgeons during a surgical operation, can be of great importance for the interest of time and/or for education purposes. Effective communication often requires pointing at a specific point within the surgical cavity. For example, education relies a lot on pointing while explaining. This is difficult for the surgeon (to point) and very difficult or impossible for the students/residents to follow without proper pointing. However, pointing at a specific point within the surgical cavity is time consuming, as the surgeon has to use the tip of the tool currently in hand, which means he needs to stop and interrupt the workflow. Further, due to the workflow disturbance, sometimes the surgeon may avoid communicating to express a thought or ask an opinion. Further, pointing by touching the tissue with an instrument within the surgical cavity is not totally free of risk. Thus, there may be a desire for an improved concept for a communication between different users.

### Summary

This desire is addressed by the subject-matter of the independent claims.

The concept proposed in the present disclosure is based on the insight, that an adjusted image of the sample to be displayed on the display device can be generated based on gaze direction data indicative of gaze direction of the user of an optical imaging system. Based on the gaze direction data a region of interest can be determined to be emphasized in the adjusted image of the sample. Thus, an adjusted image of the sample 110 can be generated comprising an emphasized area indicative of the region of interest, which is emphasized relative to the region of interest in the image of the sample. In this way, a region of interest the user is looking at can be highlighted in the adjusted image of the sample. Thus, a recognition of another person of the region of interest can be improved, for example.

Examples provide an apparatus for an optical imaging system comprising one or more processors and one or more storage devices. The apparatus is configured to obtain sensor data of an optical imaging sensor of the optical imaging system. The sensor data is indicative of an image of a sample. Further, the apparatus is configured to obtain gaze direction data of a sensor. The gaze direction data is indicative of a gaze direction of a user of the optical imaging system. The apparatus is further configured to generate region data indicative of a region of interest that the user gazes at on the image of the sample. The region data is generated based on the gaze direction data. Further, the apparatus is configured to generate output data indicative of an adjusted image of the sample to be displayed on a display device. The output data is generated based on the sensor data and the region data. The adjusted image of the sample comprises an emphasized area indicative of the region of interest, such that the emphasized area is emphasized relative to the region of interest in the image of the sample. The apparatus is further configured to transmit the output data for displaying on the display device. Obtaining the gaze direction data may allow to generate a region of interest the user is interested in. For example, during surgery a user may look at (a part of) an anatomical future, such like a vein, an artery, a bone he is interested in, e.g., for a next operation process. The region of interest can be used to adjust the image of the sample to generate an adjusted image of the sample. The adjusted image of the sample may allow another user to easily recognize the region of interest the user is gazing at. In this way, a communication between different users can be facilitated. Thus, using the sensor data and the gaze direction data may allow to display an image of the sample indicative of the view of the sample and a visualization of the gaze of a user of the microscope.

In an example, the apparatus may be configured to generate the output data comprising the emphasized area by adjusting a luminance, a sharpness, a color setting, the size and/or an orientation of the emphasized area or a periphery of the emphasized area. Thus, either the region of interest or the periphery or surroundings of the region of interest can be adjusted. In this way, a gaze direction of another user can be triggered, so that the other user gazes instinctively at the region of interest of the user.

In an example, the gaze direction may be indicative of a time when the user had the gaze direction. The apparatus may be configured to determine the region of interest based on the time when the user had the gaze direction. Using the time the user had the gaze direction may allow to increase a reliability of the determination of the region of interest. For example, when the user searches with his eyes in the image of the sample for an anatomical feature, no adjustment of the image of the sample should be triggered. In this way, a false-positive events indicating a region of interest which the user is not actually interested in can be reduced or even avoided.

In an example, the apparatus may be configured to determine the region of interest by comparing the time when the user had the gaze direction with a threshold time. When the threshold time is exceeded by the time the user had the gaze direction, the apparatus may be configured to identify the region that the user gazes at as region of interest. In this way, a reliability of the determination of the region of interest can be increased. Further, the threshold time may allow the user to control an adjustment of the image of the sample based on a time the user is gazing at the region of interest. This may provide an improved control for the user of a selection of a region of interest to be highlighted.

In an example, the apparatus may be configured to determine a second region of interest based on the time when the user had the gaze direction and to generate the output data based on the second region of interest. In this way, multiple regions of interest can be visualized in the adjusted image of the sample. For example, multiple anatomical features of the sample at different regions can be highlighted by the multiple regions of interest. This may improve the usability of the adjusted image of the sample, especially when multiple regions are of interest to the user at the same time.

In an example, the apparatus may be configured to determine when the region of interest is no longer of interest to the user based on the time when the user had the gaze direction and to adjust the adjusted image of the sample comprising the emphasized area indicative of the region of interest, such that the emphasized area is no longer emphasized relative to the region of interest in the image of the sample. In this way, a region the user was interested in and thus was emphasized can be adjusted to be no longer emphasized based on the time when the user had the gaze direction. Thus, displaying an outdated region of interest that may distract the attention of another user can be avoided.

In an example, the apparatus may be configured to adjust the sharpness of the emphasized area by generating focus data indicative of an adjusted focus of a microscope of the optical imaging system. Further, the apparatus may be configured to transmit the focus data for adjusting the focus of the microscope, such that the region of interest is focused in the adjusted image of the sample. In this way, a perception of the region of interest can be increased by increasing the sharpness of the region of interest. Thus, the user may instinctively gaze at the region of interest.

In an example, the apparatus may be configured to adjust the orientation of the emphasized area by shifting the position of the emphasized area such that the emphasized area is in the middle of the adjusted image of the sample. In this way, a perception of the region of interest can be increased by shifting the region of interest to a center, e.g., a center of the display device the adjusted image of the sample is displayed on. Thus, the user may instinctively gaze at the region of interest.

In an example, the apparatus may be configured to determine an accuracy score indicative of an accuracy of the generated gaze direction data and to generate the adjusted image of the sample based on the accuracy score. For example, the emphasized area can be emphasized more strongly for an increased accuracy. For example, when the user is gazing at the region of interest for certain time, emphasizing the emphasized area can be intensified. In this way, a reliability of the emphasized area can be improved.

In an example, the apparatus may be configured to obtain display data indicative of a display device used to display the adjusted image of the sample and to generate the adjusted image of the sample based on the display data. In this way, the region of interest can be determined based on the sensor data, the gaze direction data and the display data, such that the region of interest can be deduced without determining the actual point of view of the user.

In an example, the apparatus may be configured to obtain user data indicative of a user to whom the adjusted image of the sample is displayed and to generate the adjusted image of the sample based on the user data. In this way, a user specific adjusted image of the sample 110 can be generated and can be displayed to the specific user. Thus, an information overload for a user can be reduced.

In an example, the apparatus may be configured to obtain second gaze direction data of a second sensor. The second gaze direction data is indicative of a gaze direction of a second user of the optical imaging system. Further, the apparatus may be configured to generate, based on the second gaze direction data, second region data indicative of a second region of interest that the second user gazes at. The apparatus may be further configured to generate, based on the second region data, the output data indicative of the adjusted image of the sample comprising a second emphasized area indicative of the second region of interest, such that the second emphasized area is emphasized relative to the second region of interest in the image of the sample. In this way, multiple emphasized areas of multiple users can be displayed by displaying the adjusted image of the sample. Thus, a communication between multiple users can be facilitated.

In an example, the apparatus may be configured to generate the output data indicative of the adjusted image of the sample comprising an indication element. The indication element is indicating to which user of the optical imaging system the emphasized area belongs. In this way, an assignment of the emphasized area to a specific user of the optical imaging system can be facilitated.

In an example, the apparatus may be configured to generate the output data by generating a marker element, the marker element indicative of a position of the region of interest, such that the emphasized area in the adjusted image of sample is emphasized relative to the region of interest in the image of sample by the position of the marker element. In this way, the region of interest can be indicated using a marker such like a geometric object at least partly surrounding the region of interest. Thus, highlighting the emphasized area can be facilitated. For example, the image of the sample can be adjusted by adding only the marker.

Examples provide an optical imaging system comprising an apparatus as described above.

Examples provide a method for an optical imaging system comprising obtaining sensor data of an optical imaging sensor of the optical imaging system, the sensor data indicative of an image of a sample. Further, the method comprises obtaining gaze direction data of a sensor, the gaze direction data indicative of a gaze direction of a user of the optical imaging system and generating, based on the gaze direction data, region data indicative of a region of interest that the user gazes at on the image of the sample. The method further comprises generating, based on the sensor data and the region data, output data indicative of an adjusted image of the sample to be displayed on a display device, the adjusted image of the sample comprising an emphasized area indicative of the region of interest, such that the emphasized area is emphasized relative to the region of interest in the image of the sample and transmitting the output data for displaying on the display device. The method may be executed by an apparatus as described above.

Various examples of the present disclosure relate to a corresponding computer program with a program code for performing the above method when the computer program is executed on a processor.

### Short description of the Figures

Some examples of apparatuses and/or methods will be described in the following by way of example only, and with reference to the accompanying figures, in which
Figs. 1a and 1b show schematic diagrams of an example of an apparatus for an optical imaging system and of a corresponding optical imaging system comprising the apparatus;
Fig: 2 shows an example of an adjusted image of a sample;
Fig. 3 shows a flow chart of an example of a method for an optical imaging system; and
Fig. 4 shows a schematic diagram of a system comprising a microscope and a computer system.

### Detailed Description

Various examples will now be described more fully with reference to the accompanying drawings in which some examples are illustrated. In the figures, the thicknesses of lines, layers and/or regions may be exaggerated for clarity.

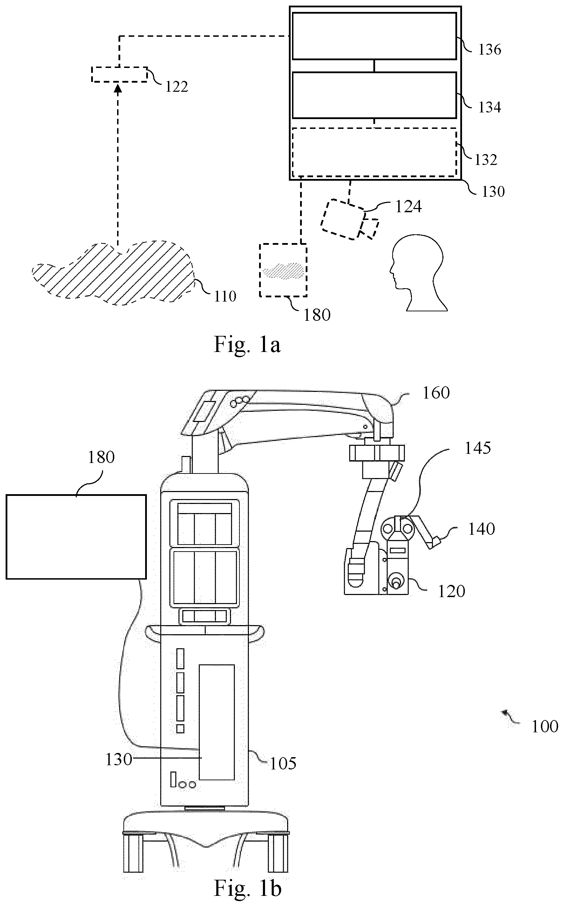

Figs. 1a and 1b show schematic diagrams of an example of an apparatus 130 for an optical imaging system 100 and of a corresponding optical imaging system 100 comprising the apparatus 130. The apparatus 130 is tasked with controlling various aspects of a microscope 120 of the optical imaging system 100, which may be a surgical optical imaging system, and of the entire optical imaging system 100 and/or with processing various types of sensor data of the optical imaging system 100. Consequently, the apparatus 130 may be implemented as a computer system, which interfaces with the various components of the optical imaging system 100, e.g., the sensor 122. The apparatus 130 may be part of the optical imaging system 100. Alternatively, the apparatus 130 may be communicatively coupled to the optical imaging system 100. For example, the apparatus 130 may be a ready-to-use-module, that could be connected to the optical imaging system 100.

The apparatus 130 comprises, as shown in Fig. 1a, one or more processors 134 and one or more storage devices 136. Optionally, the apparatus 130 further comprises one or more interfaces 132. The one or more processors 134 are coupled to the one or more storage devices 136 and to the optional one or more interfaces 132. In general, the functionality of the apparatus 130 may be provided by the one or more processors 134 (e.g., for generating the region data or for generating the output data), in conjunction with the one or more interfaces 132 (for exchanging information, e.g., with the sensor 122 or a display device to transmit the output data) and/or with the one or more storage devices 136 (for storing and/or retrieving information).

The apparatus 130 is configured to obtain sensor data of an optical imaging sensor 122 of the optical imaging system 100. The sensor data is indicative of an image of a sample 110. For example, the sensor data may be obtained by receiving from a sensor, e.g., an optical imaging sensor 122 of the microscope 120 or from a frame buffer, e.g., part of the optical imaging system 100. Optionally or alternatively, the sensor data may be obtained by measuring by the apparatus 130. For example, the optical imaging sensor 122 may be part of the apparatus 130. Thus, the apparatus 130 may control the optical imaging sensor 122 to measure the sensor data. The sensor data may be raw data from the sensor, i.e., the apparatus 130 may post process the sensor data. Alternatively, the sensor data may be post-processed data from the sensor, i.e., no further post-processing may be necessary by the apparatus 130.

Further, the apparatus is configured to obtain gaze direction data of a sensor 124. The gaze direction data is indicative of a gaze direction of a user of the optical imaging system 100. For example, the gaze direction data may be obtained by receiving from a sensor, e.g., an eye tracking sensor 124 of a display device and/or a camera, e.g., part of the optical imaging system 100. Optionally or alternatively, the gaze direction data may be obtained by measuring by the apparatus 130. For example, an eye tracking sensor 124 and the apparatus 130 may be part of a display device. Thus, the apparatus 130 may control the eye tracking sensor 124 to measure the gaze direction data. The gaze direction data may be raw data from the sensor, i.e., the apparatus 130 may post process the gaze direction data. Alternatively, the gaze direction data may be post-processed data from the sensor, i.e., no further post-processing may be necessary by the apparatus 130.

Obtaining the gaze direction data may allow to determine a region of interest. Thus, the apparatus 130 is further configured to generate region data indicative of a region of interest that the user gazes at on the image of the sample. The region data is generated based on the gaze direction data. For example, the region of interest may be a region the user is interested in. The region of interest may refer to a specific, defined area or portion within an image, e.g., the image of the sample, or data set, e.g., the sensor data, that is selected for closer examination or analysis and/or the next operation process. For example, the region of interest may be used to focus on a specific region and/or specific feature within an image that are of particular interest. The region of interest may help to concentrate efforts and/or an attention of user(s) of the optical imaging system 100 on a relevant area, may improve accuracy by eliminating unnecessary information, and/or facilitate a communication, e.g., for diagnostic purposes. Thus, the region of interest may facilitate a communication between users of the optical imaging system 100.

Therefore, the apparatus 130 is configured to generate output data indicative of an adjusted image of the sample 110 to be displayed on a display device 180. The output data is generated based on the sensor data and the region data. The adjusted image of the sample 110 comprises an emphasized area indicative of the region of interest, such that the emphasized area is emphasized relative to the region of interest in the image of the sample 110. That is, the apparatus 130 can adjust the image of the sample 110, such that the region of interest is highlighted in the adjusted image of the sample 110. For example, a perceptibility of the region of interest can be increased by the emphasized area. In this way, a user of the optical imaging system 100 can be easily informed about a region of interest of another user of the optical imaging system 100. Thus, a communication between multiple users of the optical imaging system can be facilitated using the adjusted image of the sample 110.

The adjusted image of the sample 110 may be generated by adjusting the image of the sample 110 based on the region data. For example, a region of interest may be transformed to an emphasized area by brightening and/or sharpening the region of interest with respect to other parts of the image of the sample 110. That is, the adjusted image of the sample 110 can be the image of the sample 110 the was actually adjusted. Thus, the image of the sample 110 can be post-processed by the apparatus 130 to generate the output data indicative of the adjusted image of the sample 110. Optionally or alternatively, the adjusted image of the sample 110 may be generated by combining information of the region data and the sensor data. For example, the adjusted image of the sample 110 may be generated by generating a marker element as described below. The marker element may be overlaid on the image of the sample 110. The marker element may emphasize the emphasized area, e.g., by surrounding the region of interest. That is, the adjusted image of the sample 110 may comprise the image of the sample 110 overlaid with additional information, e.g., the marker element. Thus, the image of the sample 110 may not be post processed by the apparatus to generate the output data indicative of the adjusted image of the sample 110. Instead, the image of the sample 110 may be combined with additional information to generate the adjusted image of the sample 110, e.g., a composed image comprising the image of the sample 110 and a marker element.

Further, the apparatus 130 is configured to transmit the output data for displaying on the display device 180. For example, the output data may be transmitted to the display device 180. Optionally or alternatively, the output data may be transmitted to storage device such like a frame buffer. Thus, the display device 180 may retrieve the output data from the frame buffer. Therefore, the apparatus 130 can trigger and/or control displaying the adjusted image of the sample 110.

It is a finding of the inventors that using a sensor, e.g., an eye tracking sensor or a camera, to detect the gaze direction of a user of the optical imaging system 100 may allow visualization of the gaze direction of the user. That is, the gaze direction of the user can be used to determine the region of interest the user gazing at. The determined region of interest can be displayed using the adjusted image of the sample 110. For example, the gaze direction or the region of interest of the user may be emphasized in the image of the sample 110, which may allow multiple users to communicate much easier, more efficient, faster and/or with less risks for a sample 110, e.g., a patient.

The apparatus 130 may allow easy, fast, precise, and/or intuitive communication between different users of an optical imaging system. For example, when the different users are performing surgery, the apparatus 130 may improve a communication without disturbing a surgical workflow. For example, for educational and training purposes, a student can observe a gaze direction of a surgeon and can correlate it with comments of an instructor. Optionally a professor could assess and evaluate a gaze direction of a student to provide a better guidance.

The proposed concept may be built around two main components - the optical imaging system 100, which comprises the optical components, and which may comprise the display device 180 being used to view the sample 110, and the apparatus 130, which may be used to control the optical imaging system 100, process sensor data of the microscope 120, e.g., the sensor 122, and/or to generate the output data.

In general, a microscope, such as the microscope 120, is an optical instrument that is suitable for examining objects that are too small to be examined by the human eye (alone). For example, a microscope 120 may provide an optical magnification of a sample, such as a sample 110 shown in Fig. 1a. In modern microscopes, the optical magnification is often provided for a camera or an imaging sensor, such as the optical imaging sensor 122 of the microscope 120.

There are a variety of different types of optical imaging systems. If the optical imaging system 100 is used in the medical or biological fields, the sample 110 may be a sample of organic tissue, e.g., arranged within a petri dish or present in a part of a body of a patient. In some examples of the present disclosure, e.g., as shown in Fig. 1b, the optical imaging system 100 may be a surgical optical imaging system, e.g., an optical imaging system that is to be used during a surgical procedure, such as an oncological surgical procedure or during tumor surgery. However, the proposed concept may also be applied to other types of microscopy, e.g., microscopy in a laboratory or microscopy for the purpose of material inspection.

Fig. 1b shows a schematic diagram of an example of a surgical optical imaging system 100 comprising the microscope 120 and the apparatus 130. In general, a (surgical) optical imaging system is a system that comprises a microscope 120 and additional components, which are operated together with the microscope 120. In other words, a (surgical) optical imaging system is a system that comprises the microscope 120 and one or more additional components, such as the apparatus 130 (which may be a computer system being adapted to control the microscope 120 and, for example, generate the output data), an illumination system (which is used to illuminate a sample being imaged by the microscope 120), additional sensors, displays etc.

The surgical optical imaging system 100 shown in Fig. 1b comprises a number of optional components, such as a base unit 105 (which may comprise the apparatus 130) with a stand, ocular displays 140; 145 that are arranged at the microscope 120, a head-mounted display 180, and a (robotic or manual) arm 160 which holds the microscope 120 in place, and which is coupled to the base unit 105 and to the microscope 120. In general, these optional and non-optional components may be coupled to the apparatus 130, which may be configured to control and/or interact with the respective components.

In an example, the apparatus 130 may be configured to generate the output data comprising the emphasized area by adjusting a luminance, a sharpness, a color setting, the size and/or an orientation of the emphasized area or a periphery of the emphasized area.

The adjusted image of the sample 110 may enable easier and/or instinctive recognition of a region of interest a user is interested in. For example, the region of interest can be indicated by emphasizing the region of interest and/or a surrounding of the region of interest. For example, boundaries of the emphasized area can be fuzzy, e.g., a periphery of the region of interest can be blurred and/or darkened/brightened. For example, the adjusted image of the sample 110 may comprise a smooth transition from the emphasized area to the periphery. For example, parts of the image of the sample 110 which are not part of the region of interest can be darkened, such that a perceptibility of the region of interest may be increased by a decreased perceptibility of other parts of the image of the sample 110. In this way, the gaze direction of another user of the optical imaging system 100 can be attracted. That is, the other user can instinctively gaze at the emphasized area of the adjusted image of the sample 110.

For example, the adjusted image of the sample 110 can be generated by adjusting luminance such like brightness, contrast, an illumination, a sharpness, a color setting, such like a color situation, a color scale, a color tone, the size, such like a width, a height and/or an orientation of the emphasized area or periphery of the emphasized area.

The emphasized area can be substantially identical to the region of interest. That is, the region of interest can be adjusted, such that it is emphasized in comparison to the image of the sample 110. Alternatively, the emphasized area may differ from the region of interest. For example, the emphasized area may be larger than the region of interest, e.g., to allow a smooth transition between periphery of the region of interest and the region of interest. That is, the emphasized area can be emphasized by an adjustment of the periphery of the region of interest. In this way, the user can more easily and/or instinctively perceive the emphasized area that may comprise the region of interest.

In an example, the gaze direction may be indicative of a time when the user had the gaze direction. The apparatus 130 may be configured to determine the region of interest based on the time when the user had the gaze direction. The time the user had the gaze direction may allow to improve a reliability of the determination of the region of interest. Further, the apparatus 130 may generate the region data only if the gaze direction data indicates that the user has been gazing at the same position for certain time. Thus, a computational effort of the apparatus 130 can be reduced.

For example, the region data may only be generated by the apparatus 130 when the time the user has been gazing at the same position exceeds a threshold time. In an example, the apparatus 130 may be configured to determine the region of interest by comparing the time when the user had the gaze direction with a threshold time. When the threshold time is exceeded by the time the user had the gaze direction, the apparatus 130 may be configured to identify the region that the user gazes at as region of interest. Using a threshold time may allow to improve the determination of the region of interest. For example, a false-positive determination of the region of interest can be decreased using the threshold time. In this way, a reliability of the determination of the region of interest can be increased. Further, the threshold time may allow an improved interaction by the user. For example, a user aware of the threshold time may utilize the threshold time to control the visualization of a desired region of interest. For example a user may intentionally look for time longer than the threshold time on a region of the image of the sample to trigger highlighting this region as region of interest. Optionally, another trigger such like blinking and/or utterance of the user can be used to trigger a generation of the region data. In this case, the apparatus 130 may obtain trigger data indicative of an intention of the user to identify the region the user is gazing at as region of an interest, such that an adjusted image comprising an emphasized area can be generated by the apparatus 130.

In an example, the apparatus 130 may be configured to determine a second region of interest based on the time when the user had the gaze direction and to generate the output data based on the second region of interest. Determining a second region of interest may allow to generate output data indicative of an adjusted image of the sample 110 comprising multiple emphasized areas (or only one emphasized area indicative of the multiple region of interest). In this way, multiple region of interests can be visualized to another user of the optical imaging system 100. For example, a main surgeon may need feedback with respect to two different regions of the image of the sample 110. Thus, the apparatus 130 can generate output data indicative of an adjusted image of the sample comprising two emphasized areas, one for each region of interest. In this way, an assistant can easily recognize regions of interest of the main surgeon.

In an example, the apparatus 130 may be configured to determine when the region of interest is no longer of interest to the user based on the time when the user had the gaze direction and to adjust the adjusted image of the sample 110 comprising the emphasized area indicative of the region of interest, such that the emphasized area is no longer emphasized relative to the region of interest in the image of the sample 110. For example, when the user hasn't gazed at the region of interest for a certain time, the apparatus 130 may stop generating output data indicative of an adjusted image of the sample 110. In this case, the apparatus 130 may transmit the image of the sample 110 instead of the output data for displaying on the display device 180. That is, the output data may comprise the image of the sample 110. Thus, only the image of the sample 110 can be displayed to the user. In this way, displaying outdated information to another user can be avoided. Alternatively, when the apparatus 130 generates output data indicative of multiple regions of interest and the hasn't gazed at a first region of interest for a certain time, the apparatus 130 may stop emphasizing the first region of interest and may generate output data indicating the other region(s) of interest.

In an example, the apparatus 130 may be configured to adjust the sharpness of the emphasized area by generating focus data indicative of an adjusted focus of a microscope 120 of the optical imaging system 100. Further, the apparatus 130 may be configured to transmit the focus data for adjusting the focus of the microscope 120, such that the region of interest is focused in the adjusted image of the sample 110. The apparatus 130 may transmit the focus data for adjusting the focus of the microscope 120. For example, the apparatus 130 may transmit the focus data to an actor of the microscope to control an adjustment of the focus of the microscope 120. Optionally or alternatively, the apparatus 130 may transmit the focus data to a storage device, e.g., the storage device 136, to trigger an adjustment of the focus of the microscope 120, e.g., an actor of the microscope 120 may retrieve the focus data from the storage device. In this case, the generation of the output data may be based on an adjustment of a setting of the optical imaging system 100. Thus, by adjusting a setting of the optical imaging system 100 such like the focus of the microscope 120, an adjusted image of the sample 110 comprising an emphasized area (the area the microscope 120 is focused on) can be generated. That is, the output data may be indicative of the image of the sample 110 captured using the optical imaging sensor 122 without further post-processing of the image of the sample 110. The adjusted image may be generated by adjusting the setting of the optical imaging system 100 based on the region data. Thus, the output data indicative of the adjusted image of the sample 110 can be generated by the apparatus 130 by post-processing the image of the sample 110, overlaying additional information on the image of the sample 110 and/or adjusting a setting of the optical imaging system 100, e.g., of the microscope 120, to adjust a captured image of the sample 110.

In an example, the apparatus 100 may be configured to adjust the orientation of the emphasized area by shifting the position of the emphasized area such that the emphasized area is in the middle of the adjusted image of the sample 110. For example, the adjusted image of the sample 110 for displaying on the display device 180 may be a cutout of the image of the sample 110. The center of the cutout may be the emphasized area. In this case, no further post-processing or adjustment of the adjusted image of the sample 110 may be necessary. That is, the emphasized area can be emphasized by adjusting the image of the sample 110 such that the emphasized area is displayed in a center of the display device 180, for example. In this way, another user may instinctively gaze at the region of interest.

In an example, the apparatus 130 may be configured to determine an accuracy score indicative of an accuracy of the generated gaze direction data and to generate the adjusted image of the sample 110 based on the accuracy score. For example, the higher the accuracy score, the higher the accuracy. The accuracy score could be used to indicate the reliability of the determined region of interest. Thus, the emphasized area can be emphasized more strongly when there is a higher accuracy score. For example, a brightness or a sharpness of the region of interest may be increased with an increased accuracy score. For example, the size of a marker element surrounding the region of interest, or a periphery may be increased with a decreased accuracy score.

Optionally or alternatively, the adjusted image of the sample 110 may only be generated by the apparatus 130 if a certain accuracy score is reached or exceeded. In this way, generating unreliable output data can be avoided. Optionally or alternatively, the apparatus 130 may determine a measure to emphasize the emphasized area based on the accuracy score. For example, for a lower accuracy score the emphasized area may be emphasized only by adjusting a brightness and for a higher accuracy score by adjusting the brightness and a sharpness. For example, shifting the position of the emphasized area such that the emphasized area is in the middle of the adjusted image may be only performed if a certain accuracy score is reached. Optionally or alternatively, the accuracy could be used to control a size of an individual gaze marker element.

In an example, the apparatus 130 may be configured to obtain display data indicative of a display device 180 used to display the adjusted image of the sample 110 and to generate the adjusted image of the sample 110 based on the display data. In this way, the region of interest can be determined based on the sensor data, the gaze direction data and the display data, such that the region of interest can be deduced without determining the actual point of view of the user. For example, an assistant may wear a head mounted display device on which the image of the sample 110 can be displayed. Thus, the apparatus 130 can determine the region of interest based on the gaze direction, the image of the sample 110 displayed on the head mounted display device and information about the display device. For example, the apparatus 130 may receive the display data, e.g., from the display device, and/or retrieve the display data, e.g., from a storage device such like the storage device 136. Based on geometric relation between the eyes of the user and the display device, the apparatus 130 can determine the region of interest.

In an example, the apparatus 130 may be configured to obtain user data indicative of a user to whom the adjusted image of the sample 110 is displayed and to generate the adjusted image of the sample 110 based on the user data. For example, the apparatus 130 may receive the user data from an input device. Optionally or alternatively, the apparatus 130 may retrieve the user data from a storage device such like the storage device 136. The user data may allow to generate an adjusted image of the sample 110 for a specific user, e.g., for a specific user display device. Thus, the apparatus 130 can generate the output data for transmitting the output data to a specific display device. In this way, the apparatus 130 may generate different images of the sample 110 to be displayed on different display devices. For example, a main surgeon and an assistant may each wear a head mounted display device. The apparatus 130 may determine the region of interest of the main surgeon and may generate output data based on the region of interest. The output data may be intended for the assistant. That is, the apparatus 130 may transmit the output data for displaying on the head mounted display device of the assistant. The main surgeon may still see the image of the sample 110 and not the adjusted image of the sample 110 (since the main surgeon knows where he is gazing). That is, the apparatus 130 may transmit the output data for displaying on the head mounted display device of the assistant and the image of the sample 110 for displaying on the head mounted display device of the main surgeon. In this way, a specific image of the sample 110 can be displayed to a specific user of the optical imaging system 100.

In an example, the apparatus 130 may be configured to obtain second gaze direction data of a second sensor. The second gaze direction data is indicative of a gaze direction of a second user of the optical imaging system. The second gaze direction data may be obtained in the same way as the gaze direction data (which could be referred as first gaze direction data when second gaze direction data is obtained). The second gaze direction data may be obtained simultaneously with the first gaze direction data. For example, the first gaze direction data and the second gaze direction data can be received by a gaze signal from the sensor 124. Alternatively, the second gaze direction data may be obtained independently from the first gaze direction data. Further, the apparatus 130 may be configured to generate, based on the second gaze direction data, second region data indicative of a second region of interest that the second user gazes at. The apparatus 130 may be further configured to generate, based on the second region data, the output data indicative of the adjusted image of the sample 110 comprising a second emphasized area indicative of the second region of interest, such that the second emphasized area is emphasized relative to the second region of interest in the image of the sample 110. In this way, multiple emphasized areas of multiple users can be displayed by displaying the adjusted image of the sample 110. Thus, a communication between multiple users can be facilitated.

In an example, the apparatus 130 may be configured to generate the output data indicative of the adjusted image of the sample 110 comprising an indication element. The indication element is indicating to which user of the optical imaging system 100 the emphasized area belongs. In this way, an assignment of the emphasized area to a specific user of the optical imaging system 100 can be facilitated. For example, the indication element may be an avatar, a username, a colored marker element, a marker element with a specific geometry.

In an example, the apparatus 130 may be configured to generate the output data by generating a marker element, the marker element indicative of a position of the region of interest, such that the emphasized area in the adjusted image of sample 110 is emphasized relative to the region of interest in the image of sample 110 by the position of the marker element. In this way, the region of interest can be indicated using a marker such like a geometric object surrounding the region of interest. In this case, additional information may be overlaid on the image of the sample 110 to generate the adjusted image of the sample 110.

As shown in Fig. 1a the optional one or more interfaces 132 is coupled to the respective one or more processors 134 at the apparatus 130. In examples the one or more processors 134 may be implemented using one or more processing units, one or more processing devices, any means for processing, such as a processor, a computer or a programmable hardware component being operable with accordingly adapted software. Similar, the described functions of the one or more processors 134 may as well be implemented in software, which is then executed on one or more programmable hardware components. Such hardware components may comprise a general-purpose processor, a Digital Signal Processor (DSP), a micro-controller, etc. The one or more processors 134 is capable of controlling the one or more interfaces 132, so that any data transfer that occurs over the one or more interfaces 132 and/or any interaction in which the one or more interfaces 132 may be involved may be controlled by the one or more processors 134.

In an embodiment the apparatus 130 may comprise a memory, e.g., the one or more storage devices 136 and at least one or more processors 134 operably coupled to the memory and configured to perform the method described below.

In examples the one or more interfaces 132 may correspond to any means for obtaining, receiving, transmitting or providing analog or digital signals or information, e.g., any connector, contact, pin, register, input port, output port, conductor, lane, etc. which allows providing or obtaining a signal or information. The one or more interfaces 132 may be wireless or wireline and it may be configured to communicate, e.g., transmit or receive signals, information with further internal or external components.

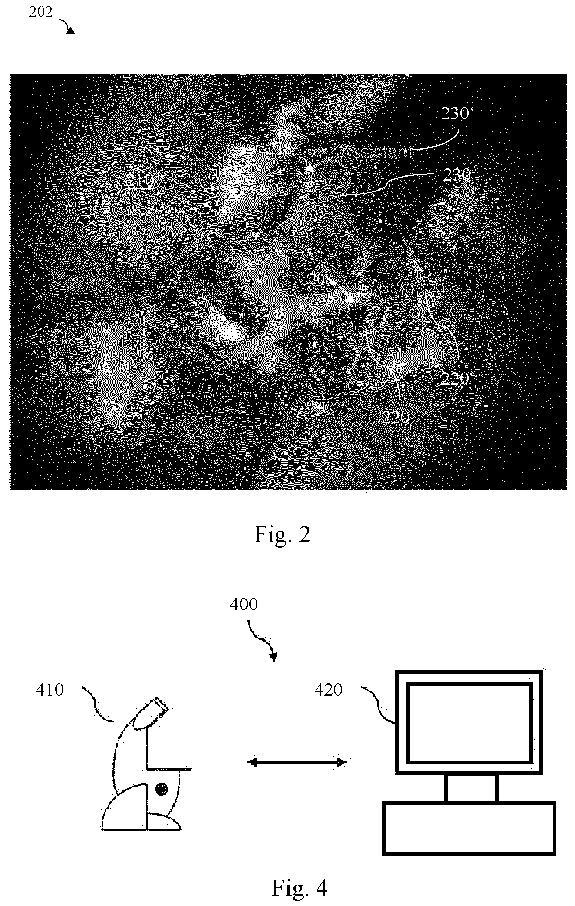

The apparatus 130 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system. The apparatus 130 may be part of optical imaging system 100. Alternatively, the apparatus 130 may be external to the optical imaging system 100 and may communicate with a device as described with reference to Fig. 2.

More details and aspects are mentioned in connection with the examples described below. The example shown in Fig. 1 may comprise one or more optional or additional features corresponding to one or more aspects mentioned in connection with the proposed concept or one or more examples described below (e.g., Fig. 2 - 4).

Fig. 2 shows an example of an adjusted image 202 of a sample 210. The adjusted image may be generated by an apparatus as described with reference to Fig. 1. As can be seen in Fig. 2, the adjusted image 202 of the sample 210 may comprise two emphasized areas 208, 218. The emphasized areas 208, 218 may be emphasized by marker elements 220, 230. The marker elements may be overlaid on an image of the sample 210 to generate the adjusted image 202 of the sample 210.

Each marker element 220, 230 may be assigned to a user of an optical imaging system. For example, a first marker element 220 may be assigned to a (main) surgeon and a second marker element 230 may be assigned to an assistant. The first marker element 220 may have a different color and/or a different shape (not shown in Fig. 2) than the second marker element 230. Optionally, indication elements 220', 230' may indicate to which user the emphasized area belongs. For example, as can be seen in Fig. 2, the indication element 220', 230' may be a text comprising a username.

Using the apparatus a visualization of a gaze direction of at least one user could be performed. As shown in Fig. 2, also a visualization of gaze directions of multiple users can be performed by the apparatus. In this way, it is clear which user gazes at which region of interest based on each marker element 220, 230, especially when more than three users use the optical imaging system. For example, marker element 220, 230 may comprise different colors, different symbols and/or different indication elements, e.g., displayed names. In an example, the marker elements 220, 230 may be designed such that they do not obstruct the observation of the sample. For example, the marker elements 220, 230 may be hollow symbols and/or transparent labels.

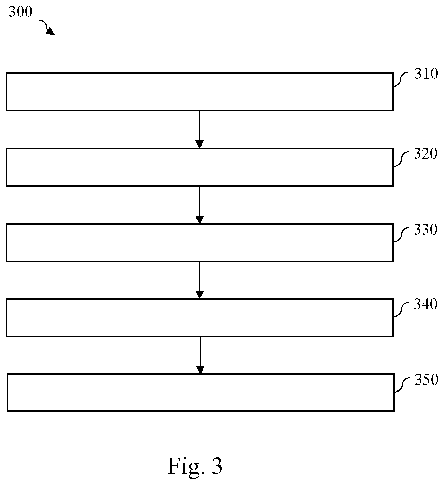

More details and aspects are mentioned in connection with the examples described above and/or below. The example shown in Fig. 2 may comprise one or more optional or additional features corresponding to one or more aspects mentioned in connection with the proposed concept or one or more examples described above (e.g., Fig. 1) and/or below (e.g., Fig. 3 -4).

Fig. 3 shows a flow chart of an example of a method for an optical imaging system. The method 300 may be performed by an apparatus as described with reference to Fig. 1. The method 300 comprises obtaining 310 sensor data of an optical imaging sensor of the optical imaging system, the sensor data indicative of an image of a sample. Further, the method 300 comprises obtaining 320 gaze direction data of a sensor, the gaze direction data indicative of a gaze direction of a user of the optical imaging system and generating 330, based on the gaze direction data, region data indicative of a region of interest that the user gazes at on the image of the sample. The method 300 further comprises generating 340, based on the sensor data and the region data, output data indicative of an adjusted image of the sample to be displayed on a display device, the adjusted image of the sample comprising an emphasized area indicative of the region of interest, such that the emphasized area is emphasized relative to the region of interest in the image of the sample and transmitting 350 the output data for displaying on the display device. The method may be executed by an apparatus as described above.

More details and aspects are mentioned in connection with the examples described above and/or below. The example shown in Fig. 3 may comprise one or more optional or additional features corresponding to one or more aspects mentioned in connection with the proposed concept or one or more examples described above (e.g., Fig. 1 - 2) and/or below (e.g., Fig. 4).

Some embodiments relate to a microscope comprising an apparatus as described in connection with Fig. 1. Alternatively, a microscope can be communicatively connected to an apparatus as described in connection with Fig. 1. Fig. 4 shows a schematic illustration of a system 400, e.g., an optical imaging system, configured to perform a method described herein, e.g., with reference to Fig. 3. The system 400 comprises a microscope 410 and a computer system 420. The microscope may comprise the apparatus as described above, e.g., with reference to Fig. 1. The microscope 410 is configured to take images and is connected to the computer system 420. The computer system 420 is configured to execute at least a part of a method described herein. The computer system 420 may be configured to execute a machine learning algorithm. The computer system 420 and microscope 410 may be separate entities but can also be integrated together in one common housing. The computer system 420 may be part of a central processing system of the microscope 410 and/or the computer system 420 may be part of a subcomponent of the microscope 410, such as a sensor, an actor, a camera or an illumination unit, etc. of the microscope 410.

The computer system 420 may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system 420 may comprise any circuit or combination of circuits. In one embodiment, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g., camera) or any other type of processor or processing circuit. Other types of circuits that may be included in the computer system 420 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

More details and aspects are mentioned in connection with the examples described above. The example shown in Fig. 4 may comprise one or more optional or additional features corresponding to one or more aspects mentioned in connection with the proposed concept or one or more examples described above (e.g., Fig. 1 - 3).

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### List of reference Signs

100 optical imaging system
105 base
110 sample
120 microscope
122 sensor
130 apparatus
132 interface
134 processor
136 storage device
140, 145 ocular display
160 arm
180 head-mounted display
202 adjusted image
210 sample
218, 228 region of interest
220, 230 marker element
220', 230' indication element
300 method for an optical imaging system
310 obtaining sensor data
320 obtaining gaze direction data
330 generating region data
340 generating output data
450 transmitting the output data
400 system
410 microscope
420 computer system

## Claims

1. An apparatus (130) for an optical imaging system (100), comprising one or more processors (134) and one or more storage devices (136), wherein the apparatus (130) is configured to:
obtain sensor data of an optical imaging sensor (122) of the optical imaging system (100), the sensor data indicative of an image of a sample (110);
obtain gaze direction data of a sensor, the gaze direction data indicative of a gaze direction of a user of the optical imaging system (100);
generate, based on the gaze direction data, region data indicative of a region of interest that the user gazes at on the image of the sample (110);
generate, based on the sensor data and the region data, output data indicative of an adjusted image of the sample (110) to be displayed on a display device (180), the adjusted image of the sample (110) comprising an emphasized area indicative of the region of interest, such that the emphasized area is emphasized relative to the region of interest in the image of the sample (110); and
transmit the output data for displaying on the display device (180).

2. The apparatus (130) according to claim 1, wherein the apparatus (130) is configured to
generate the output data comprising the emphasized area by adjusting at least one of a luminance, a sharpness, a color setting a size and an orientation of the emphasized area or a periphery of the emphasized area.

3. The apparatus (130) according to any one of the preceding claims, wherein
the gaze direction is indicative of a time when the user had the gaze direction, and wherein the apparatus (130) is configured to determine the region of interest based on the time when the user had the gaze direction.

4. The apparatus (130) according to claim 3, wherein the apparatus (130) is configured to:
determine the region of interest by comparing the time when the user had the gaze direction with a threshold time; and
when the threshold time is exceeded by the time when the user had the gaze direction, identify the region that the user gazes at as region of interest.

5. The apparatus (130) according to claim 3 or 4, wherein the apparatus (130) is configured to:
determine a second region of interest based on the time when the user had the gaze direction; and
generate the output data based on the second region of interest.

6. The apparatus (130) according any one of claims 3-5, wherein the apparatus (130) is configured to:
determine when the region of interest is no longer of interest to the user based on the time when the user had the gaze direction; and
adjust the adjusted image of the sample (110) comprising the emphasized area indicative of the region of interest, such that the emphasized area is no longer emphasized relative to the region of interest in the image of the sample (110).

7. The apparatus (130) according to any one of claims 2-6, wherein the apparatus (130) is configured to
adjust the sharpness of the emphasized area by generating focus data indicative of an adjusted focus of a microscope of the optical imaging system (100); and
transmit the focus data for adjusting the focus of the microscope, such that the region of interest is focused in the adjusted image of the sample (110).

8. The apparatus (130) according to any one of claims 2-7, wherein the apparatus (130) is configured to
adjust the orientation of the emphasized area by shifting the position of the emphasized area such that the emphasized area is in the middle of the adjusted image of the sample (110).

9. The apparatus (130) according to any one of the preceding claims, wherein the apparatus (130) is configured to:
determine an accuracy score indicative of an accuracy of the generated gaze direction data; and
generate, based on the accuracy score, the adjusted image of the sample (110).

10. The apparatus (130) according to any one of the preceding claims, wherein the apparatus (130) is configured to:
obtain user data indicative of a user to whom the adjusted image of the sample (110) is displayed; and
generate, based on the user data, the adjusted image of the sample (110).

11. The apparatus (130) according to any one of the preceding claims, wherein the apparatus (130) is configured to:
obtain second gaze direction data of a second sensor, the second gaze direction data indicative of a gaze direction of a second user of the optical imaging system (100);
generate, based on the second gaze direction data, second region data indicative of a second region of interest that the second user gazes at; and
generate, based on the second region data, the output data indicative of the adjusted image of the sample (110) comprising a second emphasized area indicative of the second region of interest, such that the second emphasized area is emphasized relative to the second region of interest in the image of the sample (110).

12. The apparatus (130) according to any one of the preceding claims, wherein the apparatus (130) is configured to
generate the output data by generating a marker element, the marker element indicative of a position of the region of interest, such that the emphasized area in the adjusted image of sample (110) is emphasized relative to the region of interest in the image of sample (110) by the position of the marker element.

13. An optical imaging system (100), comprising
an apparatus (130) according to any one of the preceding claims.

14. A method (300) for an optical imaging system, comprising:
obtaining (310) sensor data of an optical imaging sensor of the optical imaging system, the sensor data indicative of an image of a sample;
obtaining (320) gaze direction data of a sensor, the gaze direction data indicative of a gaze direction of a user of the optical imaging system;
generating (330), based on the gaze direction data, region data indicative of a region of interest that the user gazes at on the image of the sample;
generating (340), based on the sensor data and the region data, output data indicative of an adjusted image of the sample to be displayed on a display device, the adjusted image of the sample comprising an emphasized area indicative of the region of interest, such that the emphasized area is emphasized relative to the region of interest in the image of the sample; and
transmitting (350) the output data for displaying on the display device.

15. A computer program with a program code for performing the method according to claim 14 when the computer program is executed on a processor.
